# EUROPÄISCHE PATENTANMELDUNG

(11) **EP 4 699 681 A1**
(43) Veröffentlichungstag der Anmeldung: **25.02.2026**
(21) Anmeldenummer: 25196222.1
(22) Anmeldetag: 15.08.2025
(51) Int. Cl.: B01D 46/00, B01D 46/10, B01D 46/52, B05B 14/43

(54) **FILTERMODUL ZUR ABSCHEIDUNG VON LACK- UND/ODER FARBRESTEN, INSBESONDERE VON OVERSPRAY IN EINER LACKIERKABINE**

(30) Priorität: 21.08.2024 DE 102024123938
(71) Anmelder: Innovative Paint & Conveyor Systems S.L.,, 08550 Gavá, Barcelona (ES)
(72) Erfinder: KNAUS, Uwe, 75228 Ispringen (DE); STRAUB, Anton, 71083 Herrenberg (DE)
(74) Vertreter: Dantz, Jan Henning

(57) **Zusammenfassung**

Ein Filtermodul (1) zur Abscheidung von Lack- und/oder Farbresten, insbesondere von Overspray in einer Lackierkabine mit einem Gehäusekasten (7) und einer darin angeordneten Zuströmöffnung (2) und einer Abströmöffnung und einem im Gehäusekasten (7) angeordneten Flächenfiltermedium (11), welches eine Mehrzahl an Filterfalten (12, 12') zur Abscheidung der Lack- und/oder Farbresten aufweist, wobei das Filtermodul (1) eine Mehrzahl von parallel zueinander angeordneten Stützprofilen (7, 7a, 7b, 7c, 7d) auf unterschiedlichen im Gehäusekasten (2) hintereinander angeordneten Reihen (8-10) parallel zur Öffnungsebene der Zuströmöffnung (4a) aufweist, welche von dem Flächenfiltermedium (11) unter Ausbildung der Filterfalten (12, 12') umschlungen sind; sowie eine Verwendung eines solchen Filtermoduls

## Beschreibung

Die vorliegende Erfindung betrifft ein Filtermodul zur Abscheidung von Lack- und/oder Farbresten, insbesondere von Overspray in einer Lackierkabine.

Es sind plissierte Filtermedien bekannt, welche scharfkantige Filterfalten aufweisen. Bei hohem Staudruck können sich allerdings diese Filtermedien durchbiegen.

Aufgabe der vorliegenden Erfindung ist es daher ein Filtermodul bereitzustellen in welchem ein gefaltetes Filtermedium gegen überwünschte Verformung besser geschützt ist.

Die vorliegende Erfindung löst diese Aufgabe durch ein Filtermodul mit den Merkmalen des Anspruchs 1.

Ein erfindungsgemäßes Filtermodul dient der Abscheidung von Lack- und/oder Farbresten, insbesondere von Overspray in einer Lackierkabine. Das Filtermodul weist einen Gehäusekasten und eine darin angeordneten Zuströmöffnung und eine ebenfalls darin angeordnete Abströmöffnung auf. Im Gehäusekasten ist ein Flächenfiltermedium angeordnet, welches eine Mehrzahl an Filterfalten zur Abscheidung der Lack- und/oder Farbresten aufweist.

Das Filtermodul kann eine Mehrzahl von parallel zueinander angeordneten Stützprofilen, z.B. von stabförmigen Stützprofilen, aufweisen, an welchen das Flächenfiltermedium festgelegt ist. Dies stabilisiert die Form des Filtermoduls.

Weitere vorteilhafte Ausgestaltungen der Erfindung sind Gegenstand der Unteransprüche.

Die vorgenannten Stützprofile können vorteilhaft auf zumindest zwei unterschiedlichen Ebenen bzw. Reihen im Gehäusekasten angeordnet sein. Die besagten unterschiedlichen Ebenen sind hintereinander und parallel zur Öffnungsebene der Zuströmöffnung angeordnet. Die auf den unterschiedlichen Ebenen angeordneten Stützelemente sind von den Flächenfiltermedium unter Ausbildung der Filterfalten umschlungen. Durch die Umschlingung werden die vorgenannten Falten ausgebildet.

Durch die Umschlingung wird an jeder Falte eine zusätzliche Stabilisierung des Flächenfiltermediums erreicht. Ein Durchbiegen der Gesamtanordnung bei erhöhtem Strömungsdruck wird daher vorteilhaft vermieden.

Es ist von Vorteil, wenn die Filterfalten des Flächenfiltermediums wellenförmig ausgebildet sind, wobei in zumindest einem, vorzugsweise allen zuströmseitigen Wellentälern, des Flächenfiltermediums ein Stützprofil in Umschlingung mit dem Flächenfiltermedium angeordnet ist. Durch die Wellenform und die Anordnung des Stützprofils wird eine Ungleichverteilung von Schmutz im Bereich der Faltenspitze vorteilhaft vermieden. Darüber hinaus wird eine Knickkante und damit eine Schwächung des Flächenfiltermediums an dieser Stelle vorteilhaft vermieden.

Für eine einfach auszutauschende Festlegung kann das Flächenfiltermedium klemmend zwischen den Stützprofilen gehalten sein. Ab einer gewissen Filterdicke entwickelt das Flächenfiltermedium Rückstellkräfte gegen Verformung, so dass das Flächenfiltermedium auch ohne zusätzliche Fixiermittel sich klemmend gegen die Stützprofile abstützt.

Der bevorzugte Umschlingungswinkel, in welchem das Flächenfiltermedium um eines der Stützprofile herumgeführt ist, kann zwischen 100-175°, vorzugsweise zwischen 145-160°, betragen. Dies ist ein guter Bereich um ein gutes Einströmverhalten ohne Verblockung des Filtermediums oder Verklebung der Faltenschenkel zu gewährleisten

Für eine optimale randseitige Abdichtung kann das Flächenfiltermedium klemmend oder stoffschlüssig an einer Seitenwand des Filtermoduls fixiert sein.

Das Flächenfiltermedium kann zum besseren Spannen des Mediums an einem äußeren Stützprofil einer Reihe von nebeneinander angeordneten Stützprofilen mechanisch oder stoffschlüssig fixiert sein. Weiterhin kann das Flächenfiltermedium an einem oder mehreren weiteren Stützprofilen dieser Reihe lose anliegen, so dass es eine fließende Lagerung entlang dieser Stützprofile gibt.

Die Stützprofile können gewichtsoptimiert und für eine einfachere axiale Sicherung als Hohlprofile ausgebildet sein.

Die Stützprofile einer Reihe auf einer Ebene parallel zur Öffnungsebene können für einheitliche Öffnungsweiten der Falten äquidistant zueinander beabstandet sein.

Überdies kann das Filtermodul zumindest drei Reihen von nebeneinander angeordneten Stützprofilen, insbesondere äquidistant nebeneinander angeordneten Stützprofilen, auf unterschiedlichen Ebenen aufweisen, welche Ebenen parallel zur Öffnungsebene der Zuströmöffnung verlaufen. Dadurch ist es möglich ein Flächenfiltermedium wahlweise mit einer ersten Faltentiefe oder einer zweiten Faltentiefe in dem Gehäusekasten anzuordnen.

Es ist u.a. von Vorteil, wenn das Filtermodul einen ersten Filterbereich mit dem Flächenfiltermedium und einen zweiten Filterbereich mit einer zweiten Filterstufe aufweist, welcher zweite Filterbereich sich über zumindest ein Drittel des Volumens des Gehäusekastens erstreckt. Dadurch wird Bauraum für einen Vorfilter oder einen zweiten Feinfilter in dem Gehäusekasten bereitgestellt.

Das Filtermodul kann als zweite Filterstufe ein zweites Flächenfiltermedium aufweisen, welches durch eine Mehrzahl von parallel zueinander angeordneten Stützprofilen im Filtermodul festgelegt, vorzugsweise umschlungen, ist. Die Fixierung dieses zweiten Flächenfiltermediums kann auf gleiche Art und Weise erfolgen, wie beim ersten Flächenfiltermedium. Bezüglich einzelner vorteilhafter Ausgestaltungen des zweiten Flächenfiltermediums und dessen Befestigung innerhalb des Gehäusekastens wird auf die Unteransprüche verwiesen, welche im Kontext mit dem ersten Flächenfiltermedium, den Stützprofilen und/oder deren räumliche Anordnung genannt sind. Die räumliche Anordnung beider Flächenfiltermedien kann besonders bevorzugt in gleicher Weise erfolgen. Die Flächenfiltermedien der beiden Filterstufen können parallel zueinander angeordnet sein. In einer besonders bevorzugten Variante der Erfindung kann das zweite Flächenfiltermedium jedoch einen anderen Abscheidegrad als das erste Flächenfiltermedium aufweisen.

Zwischen den Schenkeln einzelner anströmseitig angeordneter Filterfalten, vorzugsweise aller anströmseitiger Filterfalten kann überdies ein weiteres Profil, insbesondere ein Stützprofil, in paralleler Ausrichtung zu den Stützprofilen angeordnet sein. Das weitere Profil, welches zuströmseitig in der Falte selbst angeordnet ist, ermöglicht eine Verwirbelung zur besseren Partikelbeladung entlang der Filterfläche und kann zugleich als Trägheitsfilter bzw. als integrierter Vorabscheider genutzt werden

Die Stützprofile können in montagefreundlicher Art und Weise eingesteckt im Gehäusekasten angeordnet sind.

Alternativ oder zusätzlich können die Stützprofile eingesteckt in zwei Steckplatten angeordnet sein, welche jenseits der Zuströmöffnung im Gehäusekasten angeordnet und von einer parallelen Gehäusewand beabstandet sind. Jenseits der Zuströmöffnung bedeutet, dass die Steckplatten außerhalb des Bereichs der Zuströmöffnung angeordnet sind, so dass der mit der Gehäusewandung gebildete Aufnahmeraum nicht durch die Zuströmöffnung zugänglich ist. In diesem Aufnahmeraum können abgeschiedene Partikel gesammelt werden.

Für eine leichtere Anordnung und Austausch des Flächenfilterelements ist es von Vorteil, wenn die Steckplatten und die Stützprofile ein Stützmodul ausbilden, welches als separates Bauteil aus dem Gehäusekasten entnehmbar ist.

Die Stützprofile können besonders bevorzugt axial gesichert im Filtermodul angeordnet sein.

Das Filtermodul kann überdies Führungsmittel zur Vereinfachung einer Positionierung der Stützprofile bei der Montage des Filtermoduls aufweisen.

Einzelne oder alle Stützprofile des Filtermoduls können vorteilhaft als Rundprofile, vorzugsweise als Hohlprofile, ausgebildet sein. Diese Elemente sind einfach zu fertigen und in großer Stückzahl verfügbar.

Weiterhin kann das gesamte Filtermodul, abgesehen vom Flächenfiltermedium, aus einem Cellulosematerial, vorzugsweise aus Pappe, gebildet sein. Wenn das Flächenfiltermedium seine Maximalbeladung erreicht hat, kann das Filtermodul ganzheitlich entsorgt werden.

Abgesehen vom Flächenfiltermedium kann das gesamte Filtermodul oder einzelne Bauteile, insbesondere der Gehäusekasten und die Stützprofile, aus Metall - also wiederverwertbar - gefertigt sein.

Das Flächenfiltermedium ist vorteilhaft getrennt von den weiteren Bauteilen des Filtermoduls entnehmbar.

Schließlich kann das Flächenfiltermedium ein Vlies, vorzugsweise ein Faservlies umfassend Kunstfasern und/oder Cellulosefasern aufweisen oder aus einem solchen Vlies besteht. Dieses Material weist neben seiner unkomplizierten Entsorgung auch besonders gute Filtereigenschaften auf.

Weiterhin erfindungsgemäß ist die Verwendung des erfindungsgemäßen Filtermoduls als ein einem Trägheitsfilter strömungsmechanisch-nachgeordneter Feinfilter in einer Abscheidevorrichtung zur Abscheidung von Lack und/oder Farbresten aus einem Luftstrom, insbesondere aus Overspray in einer Lackierkabine.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Insbesondere gibt es eine Vielzahl von Möglichkeiten im Detail näher erläutert. Es zeigen:
- Fig. 1: Perspektivansicht einer erfindungsgemäßen Variante eines Filtermoduls;
- Fig. 2: Schnittansicht des Filtermoduls der Fig. 1;
- Fig. 3: Perspektivansicht einer abgewandelten Variante des Filtermoduls der Fig. 1 und 2 ohne Filtermedium;
- Fig. 4: seitliche Schnittansicht des Filtermoduls der Fig. 1-3 in einer weiteren abgewandelten Variante;
- Fig. 5: Explosivdarstellung des Filtermoduls der Fig. 1 und 2 ohne Filtermedium;
- Fig. 6: Schnittansicht einer weiteren Variante des Filtermoduls der Fig. 5 mit eingelegten Filtermedium; und
- Fig. 7: Explosivansicht eines weiteren Filtermoduls in Abwandlung der Fig. 5 mit getrennt entnehmbaren Filtereinsatz.

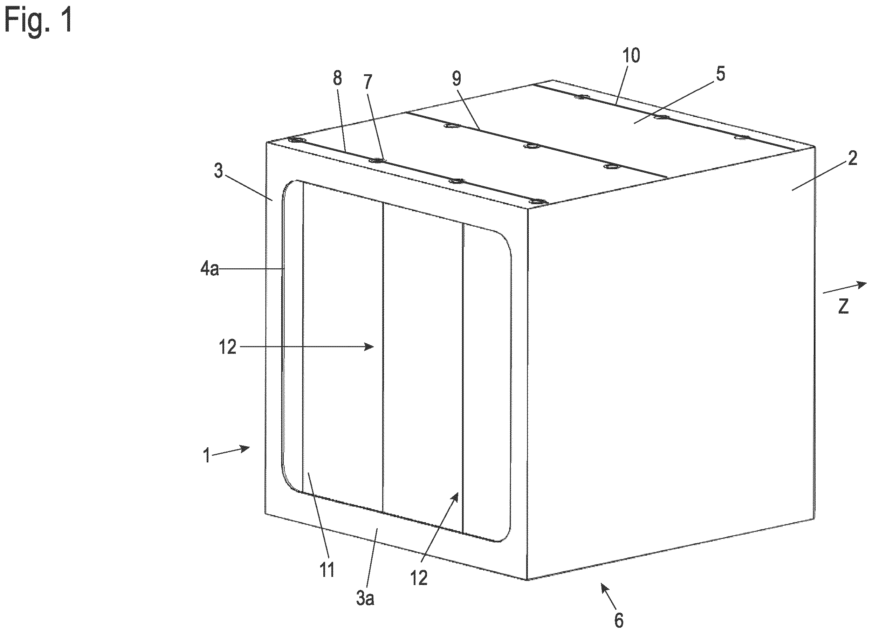

Fig. 1 zeigt ein Filtermodul 1, welches als Feinfilter oder Hauptfilter in einer Anlage zur Lackabscheidung ausgebildet ist. Die Anlage kann weitere Filtermodule als Vorfilter aufweisen. Der Vorfilter kann als ein sogenannter Trägheitsfilter ausgebildet sein.

Das Filtermodul 1 weist einen Gehäusekasten 2 mit einer Vorderwandung 3 mit einer Zuströmöffnung 4a auf, durch welche mit Lack- und Farbresten beladene Luft, sogenanntes Overspray, in den Gehäusekasten 2 geleitet wird. Die Haupt-Zuströmrichtung wird mit Z dargestellt. Sie entspricht einer Flächennormalen einer durch die Zuströmöffnung 4a definierten Öffnungsebene. Die rückseitige Abströmöffnung ist in Fig. 1 nicht dargestellt. Die Vorderwandung 3 weist einen Rahmenbereich 3a auf, welcher um die Zuströmöffnung 4a herum angeordnet ist.

Der Gehäusekasten weist eine Oberseite 5 und eine Bodenseite 6 auf, in welchen Aussparungen 13 zur Durchführung von Stützprofilen 7 angeordnet sind. Die Stützprofile 7 können insbesondere als Stützstäbe ausgebildet sein. Die Stützprofile 7 sind in mehreren Reihen 8-10 angeordnet, welche senkrecht zur vorgenannten Flächennormale angeordnet sind. Die Stützprofile 7 jeweils einer Reihe 8-10 sind äquidistant zueinander angeordnet. Dadurch werden bei Einlage eines Flächenfiltermediums 11 mehrere nebeneinander angeordnete Filterfalten 12 oder alternativ Filtertaschen mit gleich großem Öffnungsquerschnitt ausgebildet. Die Filterfalten 12 weisen zuströmseitige Öffnungen mit dem vorgenannten Öffnungsquerschnitt auf, mit einer größeren Längserstreckung als eine Breitenerstreckung. Die Längserstreckung der Öffnungen verläuft parallel zu den Längsachsen der Stützprofile 7 im Gehäusekasten 2.

Aus der vorhergehenden Beschreibung des Filtermoduls 1 wird klar, dass es sich bei dem Filtermodul 1 um einen Taschenfilter handelt. Die Vorderwandung 3 ist quadratisch ausgebildet. Da entsprechende Filtermodule 1 oftmals übereinander und nebeneinander gestapelt in der Anlage zur Lackabscheidung angeordnet sind, wird durch eine quadratische Ausgestaltung der Vorderwandung 3 eine einfachere Planung und Konzeptionierung einer Filterwand aus mehreren Filtermodulen 1 möglich. Die Filterfalten 12 werden von innen nach außen durchströmt.

Abgesehen von Flächenfiltermedium 11 können einzelne oder alle Bestandteile des Filtermoduls 1 aus einem Cellulosematerial, vorzugsweise aus Papier oder Pappe, ausgebildet sein. Dadurch kann das Filtermodul 11 als single-use Bauteil verwandt werden.

Es ist allerdings auch möglich, dass den Gehäusekasten 2 mit den darin angeordneten Stützprofilen aus Metall zu fertigen. Während das Flächenfiltermedium vorzugsweise pyrolysierbar bei Temperaturen von mehr als 500°C, vorzugsweise sogar bei Temperaturen von mehr als 300°C, ist und dadurch entsorgt werden kann, ist der restliche Gehäusekasten 2 wiederverwendbar. So kann ein erneutes Filtermodul 1 durch Einlage eines neuen Flächenfiltermediums 11 in metallischen Gehäusekasten 2 bereitgestellt werden.

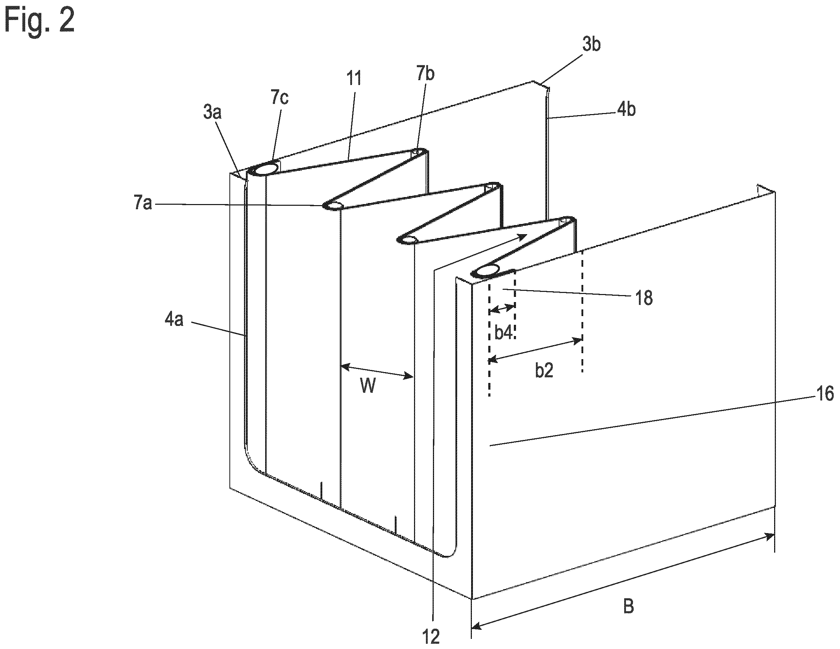

Fig. 2 zeigt die Anordnung des Flächenfiltermediums 11 durch die Stützprofile 7. Die Stützprofile 7 werden von dem Flächenfiltermedium 11 umschlungen. Das Flächenfiltermedium 11 weist vorzugsweise keine formschlüssige Verbindung mit einem, mehreren oder allen Stützprofile 7 auf, mit denen das Flächenfiltermedium 11 in Kontakt steht.

Wie Fig. 2 zeigt, wird eine faltenförmige Filterfalte 12 des Filtermoduls 1 durch die Umschlingung von drei Stützprofilen 7a-7c begründet. Der Abstand zweier Stützprofile 7a und 7c auf einer gemeinsamen Reihe 8 definiert dabei die Öffnungsweite der Filterfalte 12. Die Tiefe der Filterfalte wird durch den Abstand des Stützprofils 7b einer weiteren Reihe 9 oder 10 gegenüber den Stützprofilen 7a und 7c definiert. Dabei liegt der Stützprofil 7b bodenseitig in der Filterfalte 12 ein und verhindert dadurch vorteilhaft ein Verkleben der Filterfalte 12 an deren bodenseitige Spitze z.B. durch Lackpartikel oder dergleichen. Vorzugsweise ist die Filterfalte 12 überdies spiegelsymmetrisch ausgebildet, mit einer Spiegelebene die mittig durch die Filterfalte und senkrecht zur die Zuströmöffnung 4a verläuft. Dadurch sind die beiden Teilflächen des Flächenfiltermediums 11, aus welchen die Filterfalte 12 gebildet ist, gleich groß, wodurch eine gleichmäßige Aufnahme von Partikeln aus dem Luftstrom und eine gleichmäßige Druckbelastung beider Teilflächen erfolgt.

Die überwiegende Anzahl der Stützprofile 7 oder alle Stützprofile 7 im Gehäusekasten sind vorzugsweise als Rundstäbe ausgebildet. Die Rundstäbe können als Vollstäbe oder bevorzugt für ein leichteres Gesamtgewicht des Filtermoduls als Hohlstäbe ausgebildet sein.

Die Stützprofile können alternativ zu den Rundstäben auch andere Formen aufweisen, z.B. Drei-, Vier- oder Mehrkantstäbe jeweils vorzugsweise mit abgerundeten Ecken. Es sind auch Stäbe mit ovalem Querschnitt oder längshalbierte Rundstäbe, drei, vier- oder Mehrkantstäbe und dergleichen denkbar.

Die Stützprofile weisen eine zumindest 10-fach, vorzugsweise zumindest 30-fach bis 1000-fach größere Längenausdehnung als Breitenausdehnung auf.

Die Stützprofile können sowohl als Vollstäbe oder Hohlstäbe in den vorbeschriebenen Formen ausgebildet sein. Auch im Profilquerschnitt gebogene oder abgekantete Blechstreifen, die nachfolgend als Winkelstäbe bezeichnet werden, fallen gemäß der vorliegenden Erfindung unter die Definition eines Stützstabes.

Die Stützprofile 7 erstrecken sich über einen Kontaktbereich des Flächenfiltermediums von weniger als 20%, vorzugsweise von 2-15% der Gesamtfläche des Flächenmediums 11.

Sie sind als Einzelprofile in dem Gehäusekasten 2 eingesetzt. Vorzugsweise erfolgt die Verbindung der Einzelprofile ausschließlich durch den Gehäusekasten, insbesondere über die Oberseite und die Bodenseite des Gehäusekastens 2.

Der bevorzugte Umschlingungswinkel, in welchem das Flächenfiltermedium 11 um eines der Stützprofile 7 jeweilige Stützprofil herumgeführt ist, kann bevorzugt zwischen 130-170°, vorzugsweise zwischen 145-160°, betragen.

Ebenfalls bevorzugt erstreckt sich das Flächenfiltermedium 11 über mehr als 90%, vorzugsweise über mehr als 95% der Längserstreckung des Stützprofils.

Der Gehäusekasten 2 weist überdies zwei geschlossene gegenüberliegende Seitenwände 16 auf. An diesen Seitenwände 16 kann jeweils ein Endabschnitt des Flächenfiltermediums 11 fixiert sein.

Zur endständigen Fixierung des Flächenfiltermediums sind zahlreiche Varianten möglich, von denen lediglich einige Varianten erläutert werden. Es ist beispielsweise möglich, dass an den Seitenwänden Fixierelemente, vorzugsweise Klemmleisten, besonders bevorzugt federgelagerte Klemmleisten, angeordnet sind. Im Fall von Klemmleisten können diese sich parallel zur Ausrichtung der Stützprofile erstrecken.

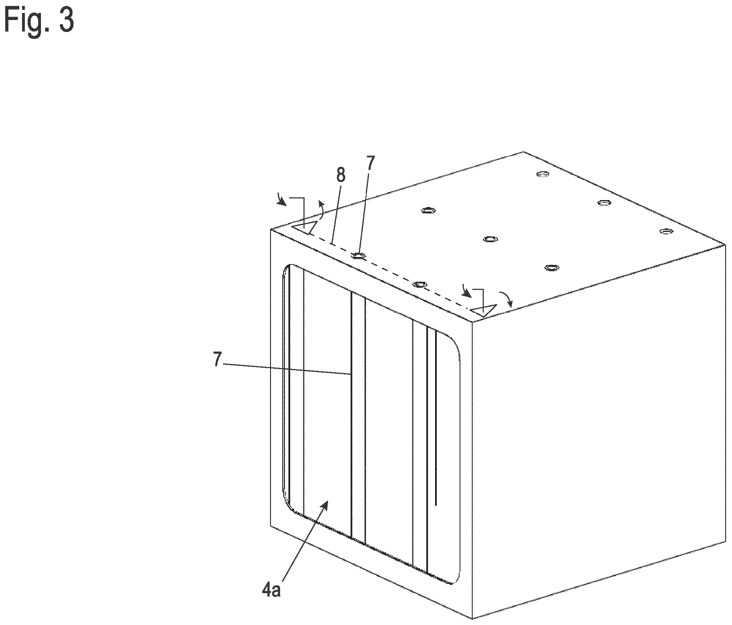

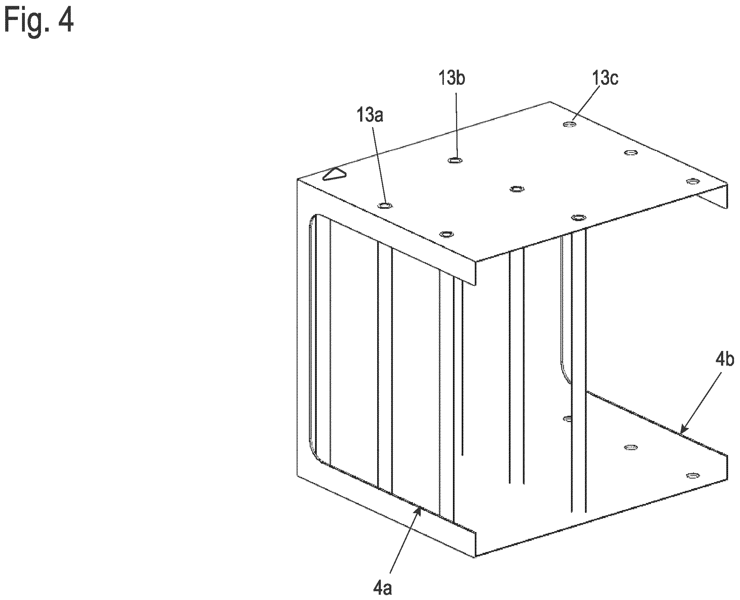

Auch andere Klemmvarianten zur Fixierung eines Endabschnitts des Flächenfiltermediums 11 sind möglich. Beispielsweise können die zu den Seitenwände 16 am nächsten angeordneten Stützprofile keine Rotationssymmetrie aufweisen und, wie in Fig. 2 und 4, einen ovalen Querschnitt, oder, wie in Fig. 3, einen drei- oder mehreckigen Querschnitt aufweisen.

Durch Drehung des jeweils randseitig in der Reihe 8 angeordneten Stützprofils 7c, wie in Fig. 3 dargestellt, erfolgt eine Verringerung des Zwischenraumes zwischen der jeweiligen Seitenwand 16 und dem Stützprofil 7c, in welchem der Endbereich des Flächenfiltermediums 11 einliegt. Diese Befestigung ist zugleich vorteilhaft um das Flächenfiltermedium 11 im Gehäusekasten 2 besser auszurichten und/oder zu spannen.

Auch andere Arten der Fixierung des Endbereichs des Flächenfiltermediums 11 an der Seitenwand 16 sind denkbar. So kann das Flächenfiltermedium 11 im Endbereich eine Klebeschicht aufweisen. Vor dem Einführen in den Gehäusekasten 2 kann diese Klebeschicht mit einer Folie oder einem Trennpapier versehen sein, welche oder welches bei der Montage entfernt wird. Sodann erfolgt die Verklebung mit der Seitenwand 16.

Alternativ oder zusätzlich kann auch eine Festlegung des Flächenfiltermediums 11 an einer oder mehreren der Stützprofile derart erfolgt, dass das Stützprofil einen Längsschlitz aufweist, in welchem das Flächenfiltermedium angeordnet ist. Durch Rotation des Stützprofils um seine Längsachse kann sodann ein Umwickeln des Flächenfiltermediums 11 um das besagte Stützprofil herum erfolgen, was abermals zu einem Ausrichten und/oder Spannen des Flächenfiltermediums 11 führt.

Dabei kann das Filtermodul über einen Rastmechanismus verfügen, um ein Zurückdrehen des Stützprofils 7 zu verhindern. Dies ist nicht nur vorteilhaft für die vorhergehende Variante, sondern auch die im Kontext der Stützprofile 7c beschriebenen Einspannvariante der Fig. 2-4. Beispielsweise kann das Stützprofil 7 über einen Ratschenmechanismus mit zumindest einer Oberseite 5 oder der Bodenseite 6 verbunden sein.

Es ist auch möglich, dass eine Seitenwand 16 einfache Haltemittel, wie z.B. einen Haken, eine Nut oder eine Kederleiste aufweist und dass das Spannen des Flächenfiltermediums durch axiale Drehung eines Stützprofils nur einseitig im Gehäusekasten erfolgt.

Sofern die Fixierung des Flächenfiltermediums 11 nicht unmittelbar an den beiden Seitenwänden 16 erfolgt, empfiehlt sich das Vorsehen einer Dichtung, vorzugsweise eines leistenförmigen Dichtelements, z.B. einer Dichtlippe, mit einer Längserstreckung parallel zu den Stützprofilen im Zwischenraum zwischen dem Stützprofil und der Seitenwand oder in einem Abstand von weniger als 2 cm von diesem Zwischenraum entfernt. Dies verhindert ein seitliches Eindringen von Overspray am Filtermedium vorbei in den Gehäusekasten und dadurch eine Bypass-Wirkung.

Kommt es zu einer stoffschlüssigen Verbindung zwischen dem Flächenfiltermedium 11 und der Seitenwand 12, so erfolgt dies in einem vorderen Verbindungsbereich 18. Die Breite b4 des Verbindungsbereichs 18 kann weniger als 10%, vorzugsweise weniger als 5%, der Gesamtbreite B des Filtermoduls 1 in seiner Erstreckung entlang der Flächennormale des Öffnungsebene betragen. Vorzugsweise kann der Verbindungsbereich von dieser Öffnungsebene in einem Abstand von weniger als 20%, vorzugsweise weniger als 15%, von der besagten Öffnungsebene beabstandet sein. Dies verhindert eine Kontamination weiter Teile des Gehäusekastens 2.

In Fig. 2 erfolgt eine Umschlingung der Stützprofile 7 der in Hauptzuströmöffnung Z vorderen Reihe 8 der Stützprofile 7 und einer in einem Mittelsegment angeordneten Reihe 9 der Stützprofile 7 innerhalb des Gehäusekastens. Die Breite b2 der Erstreckung des Flächenfiltermediums 11 entlang der Flächennormalen der Öffnungsebene beträgt weniger als 50%, vorzugsweise weniger als 45%, der Gesamtbreite B des Filtermoduls 1 in dieser Raumrichtung.

Zwischen den Stützprofilen 7 kann das Flächenfiltermedium 11 aufgrund von materialspezifischen Rückstellkräften auch ohne weitere Hilfsmittel klemmend gehalten werden. Dies kann beispielsweise bei einem Flächenfiltermedium mit erhöhter Mediumsdicke erreicht werden.

Die bevorzugte Öffnungsweite W einer Filterfalte 12 senkrecht zur axialen Erstreckung der Stützprofile 7 kann vorteilhaft weniger als 40%, vorzugsweise weniger als 35% und mehr als 15%, vorzugsweise mehr als 20% der Breite der Zuströmöffnung 4a in dieser Richtung betragen.

Dadurch steht ein Gehäuseraum für eine weitere Filterstufe zur Verfügung. Ausgehend von der in Fig. 1 darstellten Hauptströmungsrichtung Z kann dies ein weiteres Flächenfiltermedium, ein anderes Feinfiltermodul und/oder ein elektrostatischer Abscheider sein.

Bei Umkehr der Hauptströmungsrichtung Z befindet sich der freie Gehäuseraum anströmseitig. In diesem Fall kann eine Trägheitsfilterstufe, z.B. eine Mehrzahl parallel zu den Stützprofilen angeordnete Säulen, Schalenbögen und/oder Lamellen angeordnet sein, welcher bereits gröbere Partikel aus dem Luftstrom herausfiltert. Der Einsatz eines Trägheitsfilters begünstigt einen geringeren Druckverlust des Filtermoduls über einen längeren Nutzungszeitraum bei der Filtration von Overspray, insbesondere mit hohem Beladungsgrad.

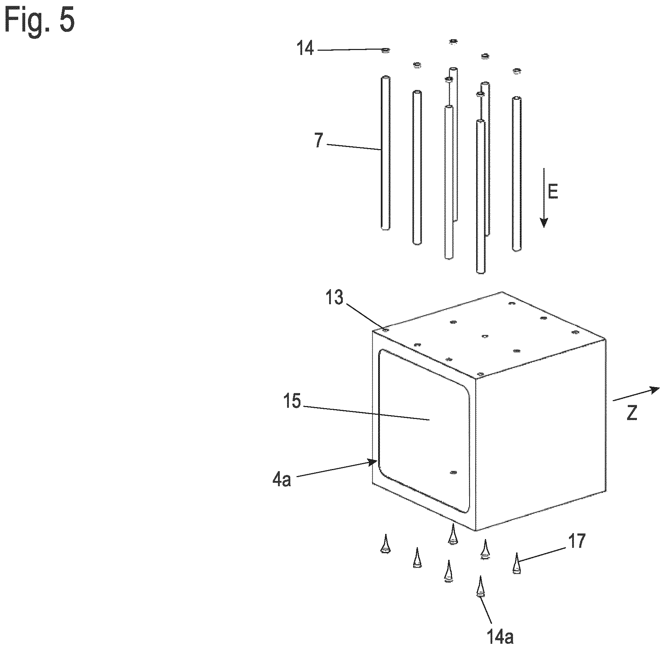

Fig. 5 zeigt einen weiteren Vorteil der Verwendung von Hohlprofilen als Stützprofilen im Rahmen der vorliegenden Erfindung. Wie man aus der Explosionsansicht herleiten kann, ist es möglich den Gehäusekasten zunächst mit den Stützprofile 7 zu bestücken. Diese werden durch die Öffnungen 13 an der Oberseite 5 eingeführt, durch den Gehäuseraum 15 geführt und durch die Öffnungen 13 an der Bodenseite 6 geführt. Die Einsteckrichtung E der Stützprofile 7 bei deren Montage ist dabei senkreicht zu der Hauptströmungsrichtung Z des Overspray-Luftstroms. Schließlich werden die Stützprofile durch Stopfen 14, welche bereichsweise an der Außenseite der Seitenwände aufliegen, axial gesichert. Bei Hohlprofilen kann dieser Stopfen 14 einfach in die Hohlkammer des Profils eingesteckt werden. Ein radial am Stopfen 14 hervorstehender Rand kann als Auflagefläche für die Seitenwände dienen.

Besonders montagefreundlich können auf der Bodenseite 6 oder der Oberseite 5 des Gehäusekastens 2 Stopfen 14a mit einem Führungsdorn 17 angeordnet sein. Diese Stopfen 14a können bereits vor dem Einsetzen der Stützprofile 7 in den Gehäusekasten 2 in die Öffnungen 13 eingesetzt und damit vormontiert werden.

Sodann kann der Führungsdorn 17 in ein jeweiliges Stützprofil 7 eingesteckt werden, so dass eine montagefreundliche Führung des Stützprofils 7 in die Öffnung und/oder durch die Öffnung 13 erfolgen kann. Schließlich kann von der entgegengesetzten Seite die axiale Sicherung durch die Stopfen 14 erfolgen.

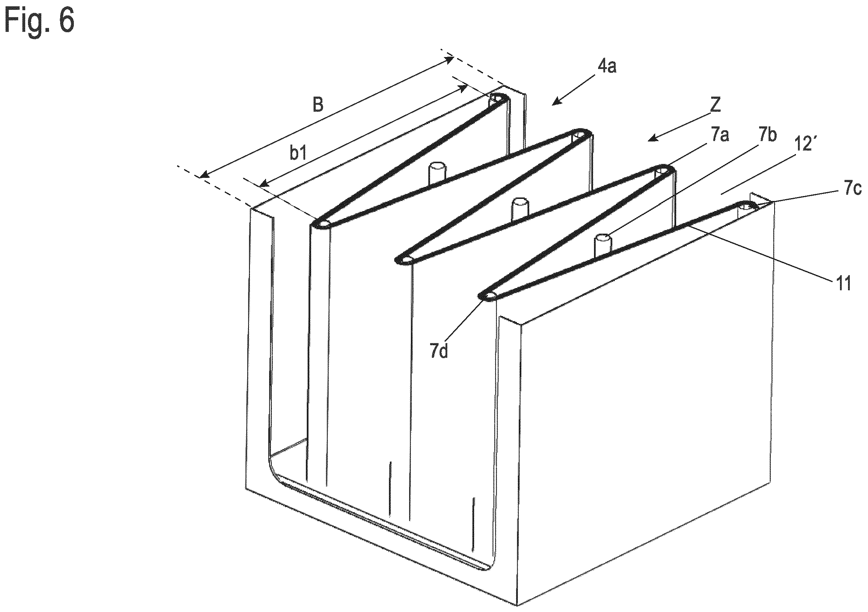

Fig. 6 zeigt eine Variante eines erfindungsgemäßen Filtermoduls 1' in Abwandlung der Variante der Fig. 1-5. Alle Angaben, die erkennbar keine Unterschiede zur Fig. 1-5 beschreiben, können synonym auch auf die Variante der Fig. 6 angewandt werden. In der Variante der Fig. 6 werden die Stützprofile 7 jeweils der beiden äußersten zuström- und abströmseitigen Reihen 8 und 10 für die Umschlingung des Flächenfiltermediums 11 genutzt. Die Umschlingungswinkel sind bei dieser Variante erkennbar größer als in Fig. 2 liegen allerdings noch in dem vorgenannten bevorzugten Bereich.

Eine Filterfalte 12' ist in dieser Variante deutlich tiefer, vorzugsweise zumindest 40% tiefer, besonders bevorzugt sogar 50% tiefer, als die Filterfalte 12 der Fig. 2.

Dabei definiert der Abstand der Stützprofile 7a und 7c analog zu Fig. 2 eine bevorzugte Öffnungsweite der Filterfalte. Das Stützprofil 7d der Reihe 10 wird durch das Filtermedium 11 außenseitig umschlungen, so dass auch in dieser Variante das Stützprofil 7d bodenseitig in der Filterfalte 12' einliegt. Die Stützprofile 7c der mittleren Reihe 9 liegen ebenfalls in der Filterfalte 12', vorzugsweise mittig in der Filterfalte 12' ein. Sie dienen in dieser Variante als ein Prallschutz und eine Möglichkeit der Verwirbelung des zuströmenden Oversprays. Dadurch wird die Beladung des Flächenfiltermediums gleichmäßiger und erfolgt schwerpunktmäßig weniger im Bereich des Spitzbodens der Filterfalte.

Alternativ zu der dargestellten Form der Stützprofile 7b können auch andere von den übrigen Stützprofilen abweichende Profilformen als Prallschutz und zur Verwirbelung in den Filterfalten angeordnet werden, um eine bessere Verteilung des Oversprays und dadurch eine bessere Verteilung der Beladung des Flächenfiltermediums 11 zu erreichen. Dadurch kann zugleich eine größere Öffnungsweite als bei vergleichbaren Taschenfiltern gewählt werden, wodurch die Gefahr des Verklebens von Filterwänden und des eingangsseitigen Druckverlustes verringert ist. Ein eingangsseitiger Druckverlust bei einem Filtermodul sorgt für Verwirbelungen im Bereich der Zuführöffnung kann zu einer Trägheitsabscheidung noch vor dem Eintritt des Oversprays in das Filtermodul 1 sorgen. Wenn hingegen ein Druckverlust erst innerhalb des Filtermoduls 1 erfolgt, so werden die abgeschiedenen Partikel im Gehäusekasten 2 des Filtermoduls aufgenommen.

Die Breite b1 der Erstreckung des Flächenfiltermediums 11 entlang der Flächennormalen der Öffnungsebene, also die Faltentiefe, beträgt in der Variante der Fig. 6 mehr als 80%, vorzugsweise mehr als 90% und weniger als 98% der Gesamtbreite B des Filtermoduls 1 in dieser Raumrichtung.

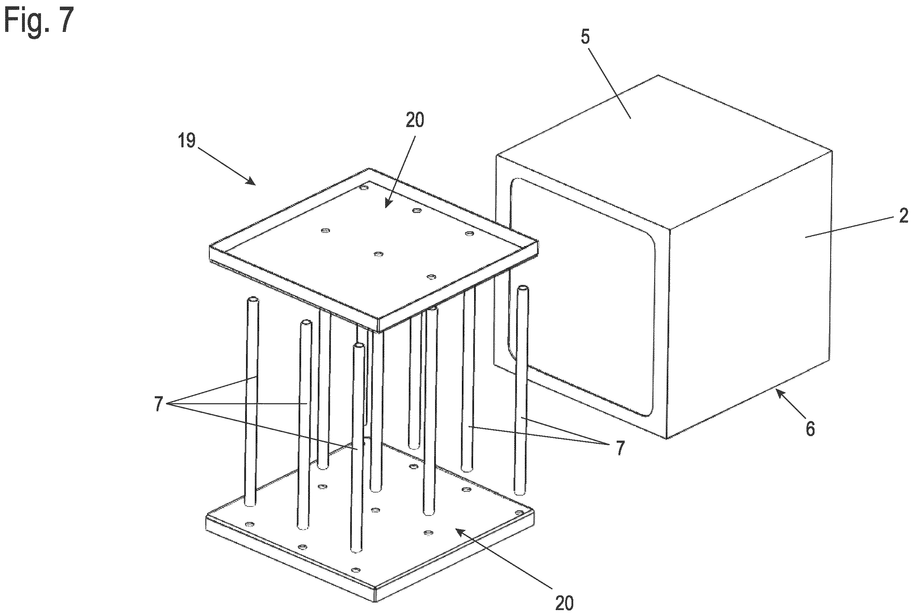

Fig. 7 zeigt eine weitere Variante eines erfindungsgemäßen Filtermoduls 1" in Abwandlung der Varianten der Fig. 1-5 und der Fig. 6. Alle Angaben, die erkennbar keine Unterschiede zur Fig. 1-6 beschreiben, können synonym auch auf die Variante der Fig. 7 angewandt werden.

In Fig. 7 ist eine Einsteck-Variante mit einem Stützmodul 19 und einem Gehäusekasten 2 dargestellt. Das Stützmodul 19 umfasst eine Mehrzahl von vorbeschriebenen Stützprofilen 7, die jeweils beidseitig endständig über Steckplatten 20 miteinander verbunden sind. Die Steckplatten 20 weisen einen oder mehrere Abstandshalter auf, zur Beabstandung der Steckplatte gegenüber der Wandung des Gehäusekastens 2 mit der Oberseite 5 und der Bodenseite 6. Dadurch werden keine Löcher im Gehäusekasten 2 benötigt und die Abdichtung nach außen wird verbessert.

Die Steckplatten 20 weisen in diesem Fall die entsprechenden Öffnungen 13 auf. Der Axialanschlag der Stützprofile kann analog zu Fig. 5 durch Stopfen 14, 14a erfolgen oder durch die Wandung des Gehäusekastens 2 selbst.

Der Raum zwischen der Wandung des Gehäusekastens 2 und der Steckplatte 20 kann zur Aufnahme von der aus dem Filtrat entfernten festen und flüssigen Substanzen genutzt werden. Für einen besseren Abfluss dieser Substanzen kann die Steckplatte 20 zusätzliche Öffnungen, z.B. Schlitze, aufweisen.

Die Steckplatten 20 stehen mit den entsprechenden Substanzen in Kontakt. Daher ist es von Vorteil, wenn diese aus einem durch Pyrolyse zu entsorgenden single-Use Material gefertigt sind. Dies kann vorzugsweise Pappe oder ein anderes Cellulosematerial sein.

Insgesamt können auch in der Variante der Fig. 7, abgesehen von Flächenfiltermodul, sämtliche Teile des Filtermoduls aus einem Pappmaterial gefertigt sein.

Es ist allerdings aus Umweltgesichtspunkten auch möglich und vorteilhaft, die Stützprofile 7 und den Gehäusekasten 2 aus einem pyrolysefesten Kunststoff oder einem Metall zu fertigen. Diese Variante erfordert allerdings einen gewissen Demontageaufwand und beeinflusst ggf. auch die Maßhaltigkeit der einzelnen Bauteile des Filtermoduls aufgrund von thermischem Verzug und damit auch die Dichtigkeit des Filtermoduls insgesamt.

Somit haben beide Varianten der Materialauswahl anwendungsspezifische Vor und Nachteile.

Gleiches gilt für das Flächenfiltermedium. Dieses kann vorzugsweise aus einem Kunststoff-Faservlies und/oder einem Cellulosefaservlies bestehen.

In allen Varianten kann man das Flächenfiltermedium 11 getrennt aus dem restlichen Filtermodul 1 entnehmen.

Das Stützmodul 20 kann ebenfalls als modulares Bauteil dem Gehäusekasten entnommen werden. Dies erleichtert u.a. die Positionierung und den Austausch des Flächenfiltermediums 11, aufgrund der besseren Zugänglichkeit der Stützprofile 7. Besonders bevorzugt ist ein Stützprofil aus allen radialen Richtungen in Bezug auf die Längsachse eines jeweiligen Stützprofils 7 im Bereich zwischen den Steckplatten 20 frei zugänglich. Somit kann das Flächenfiltermedium 11 vor der Einführung des Stützmoduls 20 in den Gehäusekasten in dem Stützmodul 20 vorpositioniert werden.

In allen Varianten der Fig. 1-7 ist das Flächenfiltermedium 11 separat aus dem Gehäusekasten 2 entnehmbar und somit austauschbar. Im Fall eines randseitigen Verklebens, kann durch Aufbringen einer entsprechenden Zugkraft das Flächenfiltermedium 11 von dem Gehäusekasten 2 getrennt werden. Dabei ist es von Vorteil, wenn die Adhäsion der Klebstoffschicht gegenüber dem Flächenfiltermedium 11 größer ist als gegenüber der Seitenwand 16. Dies kann beispielsweise dadurch erreicht werden, dass ein Bindemittel auf die Oberfläche des Flächenfiltermediums 11 aufgebracht wird, dieses zumindest oberflächlich durchdringt und dadurch Fasern oder anderes Material des Filtermediums in die Bindemittelschicht bei deren Verfestigung eingebunden werden. Demgegenüber sind die Haltekräfte durch Adhäsion mit Bezug auf die Seitenwand deutlich geringer, so dass sogar ein rückstandsfreies Ablösen des Flächenfiltermediums 11 von der Seitenwand 16 zum Zwecke des Austauschs des Flächenfiltermediums 11 möglich ist.

Wie man unmittelbar der Fig. 1-7 ist das Flächenfiltermediums entnehmen kann, wird jede Falte bzw. Umlenkung des Flächenfiltermediums durch ein individuelles Stützprofil, insbesondere durch ein stabförmiges Stützprofil, abgestützt.

### Bezugszeichen

1 1' 1" Filtermodul
2 Gehäusekasten
3 Vorderwandung
3 a Rahmenbereich
4 a Zuströmöffnung
5 Oberseite
6 Bodenseite
7 7a 7b 7c 7d Stützprofil
8 Reihe an Stützprofilen
9 Reihe
10 Reihe
11 Flächenfiltermedium
12 12' Filterfalte
13 Öffnung
14 14a Stopfen
15 Gehäuseraum
16 Seitenwände
17 Führungsdorn
18 Verbindungsbereich
19 Stützmodul
20 Steckplatte
Z Hauptströmungsrichtung
E Einsteckrichtung
B Gesamtbreite
W Öffnungsweise
b1, b2, b4, Breite

## Patentansprüche

1. Filtermodul (1) zur Abscheidung von Lack- und/oder Farbresten, insbesondere von Overspray in einer Lackierkabine mit einem Gehäusekasten (7) und einer darin angeordneten Zuströmöffnung (2) und einer Abströmöffnung und einem im Gehäusekasten (7) angeordneten Flächenfiltermedium (11), welches eine Mehrzahl an Filterfalten (12, 12') zur Abscheidung der Lack- und/oder Farbresten aufweist, **dadurch gekennzeichnet, dass** das Filtermodul (1) eine Mehrzahl von parallel zueinander angeordneten Stützprofilen (7, 7a, 7b, 7c, 7d) aufweist, durch welche das Flächenfiltermedium (11) im Filtermodul festgelegt ist.

2. Filtermodul nach Anspruch 1, **dadurch gekennzeichnet, dass** die Stützprofile (7, 7a, 7b, 7c, 7d) als Hohlprofile ausgebildet sind.und/oder **dass** einzelne oder alle Stützprofile (7, 7a, 7b, 7c, 7d) des Filtermoduls (1) als Rundprofile, vorzugsweise als Hohlprofile, ausgebildet sind.

3. Filtermodul nach Anspruch 2, **dadurch gekennzeichnet, dass** das gesamte Filtermodul (1), abgesehen vom Flächenfiltermedium (11), aus einem Cellulosematerial, vorzugsweise aus Pappe gebildet ist.

4. Filtermodul nach einem der vorhergehenden Ansprüche, **dadurch gekennzeichnet, dass** die Stützprofile (7, 7a, 7b, 7c, 7d) auf zumindest zwei unterschiedlichen im Gehäusekasten (2) hintereinander angeordneten Reihen (8-10) parallel zur Öffnungsebene der Zuströmöffnung (4a) aufweist, welche von dem Flächenfiltermedium (11) unter Ausbildung der Filterfalten (12, 12') umschlungen sind.

5. Filtermodul nach einem der vorhergehenden Ansprüche, **dadurch gekennzeichnet, dass** die Filterfalten (12, 12') des Flächenfiltermediums (11) wellenförmig ausgebildet sind, wobei in zumindest einem, vorzugsweise allen zuströmseitigen Wellentälern, des Flächenfiltermediums (11) ein Stützprofil (7, 7b, 7d) in Umschlingung mit dem Flächenfiltermedium (11) angeordnet ist.

6. Filtermodul nach einem der vorhergehenden Ansprüche, **dadurch gekennzeichnet, dass** das Flächenfiltermedium (11) klemmend zwischen den Stützprofilen (7, 7a, 7b, 7c, 7d) gehalten ist und/oder das Flächenfiltermedium (11) klemmend oder stoffschlüssig an einer Seitenwand (16) des Filtermoduls (1) fixiert ist.

7. Filtermodul nach einem der vorhergehenden Ansprüche, **dadurch gekennzeichnet, dass** der bevorzugte Umschlingungswinkel, in welchem das Flächenfiltermedium (11) um eines der Stützprofile (7, 7a, 7b, 7c, 7d) herumgeführt ist, bevorzugt zwischen 100-175°, vorzugsweise zwischen 145-160°, beträgt.

8. Filtermodul nach einem der vorhergehenden Ansprüche, **dadurch gekennzeichnet, dass** das Flächenfiltermedium (11) an einem äußeren Stützprofil (7c) der Reihe (8) von nebeneinander angeordneten Stützprofilen (7, 7a, 7c) mechanisch oder stoffschlüssig fixiert ist und dass das Flächenfiltermedium (11) an einem oder mehreren weiteren Stützprofilen (7, 7a) dieser Reihe (8) lose anliegt.

9. Filtermodul nach einem der vorhergehenden Ansprüche, **dadurch gekennzeichnet, dass** die Stützprofile (7, 7a, 7c) einer Reihe (8) auf einer Ebene parallel zur Öffnungsebene der Zuströmöffnung (4a) äquidistant zueinander beabstandet sind, wobei das Filtermodul (1) vorzugsweise zumindest drei Reihen (8-10) von nebeneinander angeordneten Stützprofilen (7, 7a, 7b, 7c, 7d), insbesondere äquidistant nebeneinander angeordneten Stützprofilen, auf unterschiedlichen Ebenen aufweist, welche Ebenen parallel zur Öffnungsebene der Zuströmöffnung (4a) verlaufen.

10. Filtermodul nach einem der vorhergehenden Ansprüche, **dadurch gekennzeichnet, dass** das Filtermodul (1) einen ersten Filterbereich mit dem Flächenfiltermedium (11) als erstes Flächenfiltermedium und einen zweiten Filterbereich mit einer zweiten Filterstufe aufweist, welcher sich über zumindest ein Drittel des Volumens des Gehäusekastens (2) erstreckt.

11. Filtermodul nach Anspruch 10, **dadurch gekennzeichnet, dass** das Filtermodul (1) als zweite Filterstufe ein zweites Flächenfiltermedium aufweist, welches durch eine Mehrzahl von parallel zueinander angeordneten, und vorzugsweise identisch zu den Stützprofilen der ersten Filterstufe, ausgebildeten Stützprofilen im Filtermodul festgelegt, vorzugsweise umschlungen, ist und wobei besonders bevorzugt das zweite Flächenfiltermedium einen anderen Abscheidegrad als das erste Flächenfiltermedium (11) aufweist.

12. Filtermodul nach einem der vorhergehenden Ansprüche, **dadurch gekennzeichnet, dass** die Stützprofile (7, 7a, 7b, 7c, 7d) eingesteckt im Gehäusekasten (2) angeordnet sind, wobei die Stützprofile (7, 7a, 7b, 7c, 7d) vorzugsweise eingesteckt in zwei Steckplatten (20) angeordnet sind, welche jenseits der Zuströmöffnung (4a) im Gehäusekasten (2) angeordnet und von einer parallelen Gehäusewand (5, 6) beabstandet sind.

13. Filtermodul nach einem der vorhergehenden Ansprüche, **dadurch gekennzeichnet, dass** die Steckplatten (20) und die Stützprofile (7) ein Stützmodul (19) ausbilden, welches als separates Bauteil aus dem Gehäusekasten (2) entnehmbar ist und/oder das Flächenfiltermedium (11) getrennt von den weiteren Bauteilen des Filtermoduls (1) entnehmbar ist.

14. Filtermodul nach einem der vorhergehenden Ansprüche, **dadurch gekennzeichnet, dass** die Stützprofile (7, 7a, 7b, 7c, 7d) axial gesichert sind und/oder **dass** das Filtermodul (1) eines oder mehrere Führungsmittel, vorzugsweise einen Führungsdorn (17) zur Positionierung der Stützprofile (7, 7a, 7b, 7c, 7d) bei der Montage des Filtermoduls (1) aufweist.

15. Verwendung des Filtermoduls (1) nach einem der vorhergehenden Ansprüche als ein einem Trägheitsfilter strömungsmechanisch-nachgeordneter Feinfilter in einer Abscheidevorrichtung zur Abscheidung von Lack und/oder Farbresten aus einem Luftstrom, insbesondere aus Overspray in einer Lackierkabine.
